# EUROPEAN PATENT APPLICATION

(11) **EP 3 415 956 A1**
(43) Date of publication of application: **19.12.2018**
(21) Application number: 17020255.0
(22) Date of filing: 18.06.2017
(51) Int. Cl.: G01V 1/00

(54) **EARLY DETECTION OF MAJOR SEISMS USING BROADBAND ACCELEROMETERS**

(71) Applicant: CERAGOS Electronics & Nature, 06800 Cagnes-sur-Mer (FR)
(72) Inventor: Cerasani, Luca, 06800 CAGNES-SUR-MER (FR)

(57) **Abstract**

Even if there are many attempts to forecast the occurrence of major seisms such as statistical methods, Radon gas detection, infrasounds emission and Magnetic Field detection there is no solution yet that has been agreed by seismologists

This invention presents two aspects:
- A new methodology based exclusively on data provided by current Broadband Accelerometers such as Episensor and allowing possible anticipation of seisms with a high magnitude.
- A technology based on previous patent application referenced 16020278-4/GDE-BC-16 to develop a new generation of Ultra-Broadband Accelerometers that can potentially detect continuous accelerations with a high sensitivity

## Description

### 1- History

Even if there are many attempts to forecast the occurrence of major seisms such as statistical methods, Radon gas detection, infrasounds emission and Magnetic Field detection there is no solution yet that has been agreed by seismologists.

Current Broadband Accelerometers can detect vibrations of very low frequencies (up to 0.003 Hz and even below) but the noise introduced quickly increases limiting in this way the dynamic range of the device in this lower frequencies band.

### 2- Presentation

This invention presents two aspects:
- A new methodology based exclusively on data provided by current Broadband Accelerometers such as Episensor and allowing possible anticipation of seisms with a high magnitude i.e. Magnitude superior to 5 (that can be at least applied to the Central Italy region)
- A technology based on previous patent application referenced 16020278-4/GDE-BC-16 to develop a new generation of Ultra-Broadband Accelerometers that can potentially detect continuous accelerations.

### 3- Description

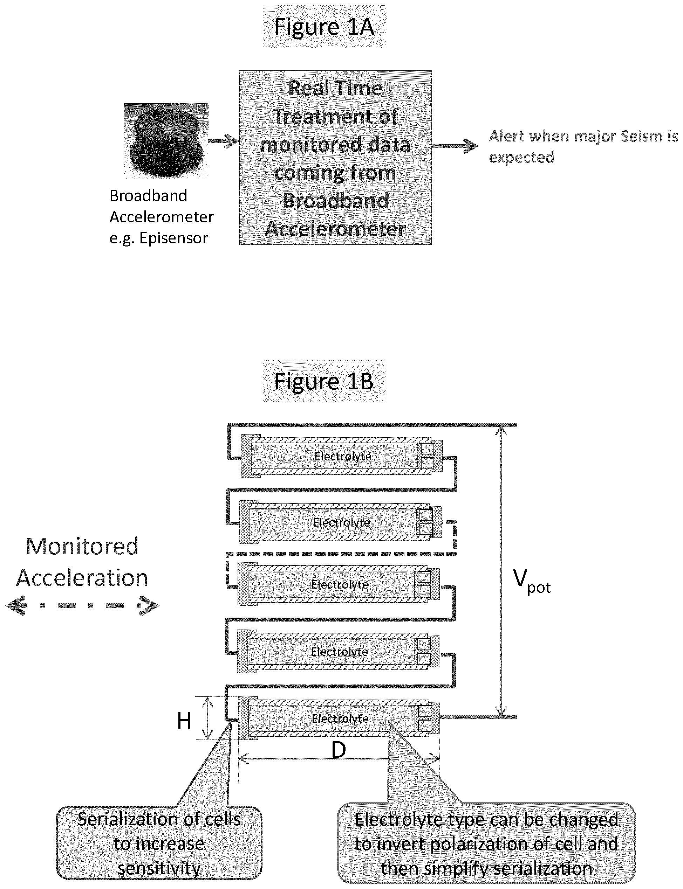

A new methodology (see figure 1a) that:
- extracts raw monitoring files delivered by Broadband Accelerometers prior to the reception of the P-Waves (i.e. before human sensing of first vibration waves)
- dynamically calculates the Acceleration Fast Fourier Transform (FFT), velocity and Displacement
- applies a set of criterion to evaluate if a major seism could occur in the very short term i.e. between a few seconds to several minutes before

A new generation of Ultra-Broadband Accelerometer (see figure 1b):
- based on previous patent application referenced 16020278-4/GDE-BC-16 which describes a new cell providing an electrical potential proportional to the acceleration. According to the orientation of the cell it can be used to detect accelerations on different directions
- its sensitivity can be increased by choosing the adequate electrolyte or simply by connecting cells in serie

## Claims

1. This new methodology only uses monitoring data provided by Broadband Accelerometers prior reception of P-Waves i.e. before human perception of seisms vibrations. It is not based on statistics but interpretation of raw acceleration data to anticipate possible occurrence of major seisms.
This new type of Accelerometers is based on previous patent application referenced 16020278-4/GDE-BC-16 describing a cell providing an output electric potential proportional to the acceleration and then allowing potential detection of static Accelerations with high sensitivity.

## Amended claims

### Amended claims in accordance with Rule 137(2) EPC.

1. A method for anticipating occurrence of major earthquakes prior to the reception of human noticeable Primary-waves comprising the steps of:
a. Remote real time monitoring of the seismic failure area using sensors including Broadband Accelerometers and output signals selection **characterized by** low-band filtering on very low level accelerations signals up to 10⁻⁶ cm/s²;
b. Subsequent application of a real time treatment that provides a warning signal before the occurrence of major earthquakes **characterized by** a warning signal that:
i. is produced several minutes before the first human perceptible Primary-waves,
ii. occurs earlier when the sensor is closer to the epicenter.

2. An Ultra Broadband Accelerometer that can be used in Claim 1. It is based on ionic diffusion in an electrolytic solution, it provides an output electrical potential proportional to the acceleration and it is **characterized by** the detection of constant accelerations with high sensitivity.
